# EUROPEAN PATENT SPECIFICATION

(11) **EP 2 342 633 B1**
(45) Date of publication and mention of the grant of the patent: **06.11.2013**
(21) Application number: 09816457.7
(22) Date of filing: 25.09.2009
(51) Int. Cl.: G06F 9/44, H04N 21/44, G06F 17/22, H04N 21/81, H04N 21/234

(54) **DEVICE AND METHOD FOR UPDATING STRUCTURED INFORMATION**
VORRICHTUNG UND VERFAHREN ZUR AKTUALISIERUNG STRUKTURIERTER INFORMATIONEN
DISPOSITIF ET PROCÉDÉ PERMETTANT DE METTRE À JOUR DES INFORMATIONS STRUCTURÉES

(30) Priority: 26.09.2008 US 100414 P; 10.10.2008 US 104347 P; 21.09.2009 KR 20090089066
(43) Date of publication of application: 13.07.2011
(73) Proprietor: Electronics and Telecommunications Research Institute, Daejeon 305-700 (KR)
(72) Inventor: CHA, Jihun, Daejeon 305-700 (KR); LEE, Injae, Daejeon 305-700 (KR); LIM, Young-Kwon, Seoul 152-848 (KR); LEE, Han Kyu, Daejeon 305-700 (KR); HONG, Jin Woo, Daejeon 305-700 (KR)
(74) Representative: Betten & Resch
(86) International application number: PCT/KR2009/005503
(87) International publication number: WO 2010/036064

(56) References cited:
- EP-A2- 2 325 767
- JIHUN CHA ET AL: "Proposal for the Presentation of Structured Information", 85. MPEG MEETING; 21-7-2008 - 25-7-2008; HANNOVER; (MOTION PICTURE EXPERT GROUP OR ISO/IEC JTC1/SC29/WG11),, no. M15622, 28 July 2008 (2008-07-28), XP030044219,
- ANONYMOUS: "WD1.0 of ISO/EC 14496-20 LASeR/Amd.3 Presentation of Structured Information", 85. MPEG MEETING;21-7-2008 - 25-7-2008; HANNOVER; (MOTION PICTUREEXPERT GROUP OR ISO/IEC JTC1/SC29/WG11),, no. N10066, 26 July 2008 (2008-07-26), XP030016559, ISSN: 0000-0039
- CYRIL CONCOLATO ET AL: "Comments on LASeR AMD3 (PSI)", 86. MPEG MEETING; 13-10-2008 - 17-10-2008; BUSAN; (MOTION PICTURE EXPERT GROUP OR ISO/IEC JTC1/SC29/WG11),, no. M15792, 9 October 2008 (2008-10-09), XP030044389,

## Description

### Technical Field

The present invention relates to a device and method of updating structured information based on presentation information.

### Background Art

There have been proposed several approaches related to an updating of Structured Information (SI) from Presentation Information (PI).

A first approach is a programmatic approach utilizing a script, and a second approach is a declarative approach defining additional information in the presentation.

The programmatic approach utilizing the script may be a very useful tool since the approach provides nearly unlimited methods for accessing the structured information.

However, the programmatic approach creates a burden due to use of a predetermined script language and requires, from a contents writer, more than a certain level of knowledge, and thus, producing Lightweight Application Scene Representation (LASeR) content that is utilized for the presentation and modification of the structured information may be difficult. Also, the programmatic approach may not utilize an advantage of LASeR being a declarative language.

Here, LASeR, which is a multimedia contents standard appropriate for a low specification mobile device such as a portable phone, may provide, through LASeR contents or an LASeR based system, a service where a wireless portal, a mobile TV, music, a personal service, and the like are combined, and may be capable of embodying a realistic motion effect and an interactive Interface.

A declarative approach mechanism is proposed based on a Moving Pictures Experts Group (MPEG) standard, and updating of the SI structured from the PI is required. When a user modifies a setting in the PI, a result of the modification may need to be stored in a predetermined format.

Accordingly, there is a need for a new element that updates the SI through the PI. Therefore, a currently existing presentation standard (LASeR) may be extended to propose a technology that effectively updates the SI.

### Disclosure of Invention

### Technical Problem

An aspect of the present invention provides a device and a method of updating Structured Information (SI), the device and the method extracting information described in Presentation Information (PI), updating the SI based on the described information, and modifying the SI based on the PI.

### Solution to Problem

According to an aspect of an exemplary embodiment, there is provided an updating device of updating structured information, including updating the structured information according to an attribute of a type.

Also, the updating device updates the structured information based on information described in scene representation data.

Also, the updating device updates the structured information based on an attribute of a type included in an externalUpdate element that supports an update of the structured information.

Also, the externalUpdate element includes an 'xlink:href' attribute indicating an element that is replaced, inserted, or deleted by using a mpeg-pmsi().

Also, the externalUpdate element includes a 'type' attribute indicating one type among a replacement, an insertion, and a deletion.

Also, the externalUpdate element includes an 'attributeName' attribute defining a name of an attribute that is replaced or inserted.

Also, the externalUpdate element includes an 'index' attribute defining an index of a child node that is replaced, inserted, or deleted.

Also, the externalUpdate element includes an 'operandElementId' element defining an identification (ID) of an element from which a replacement or an insertion is taken.

Also, the externalUpdate element includes an 'operandAttributeName' attribute defining a name of a field from which a replacement or an insertion is taken.

Also, the externalUpdate element includes a 'value' attribute indicating a value that is replaced or inserted.

Also, the externalUpdate element includes an lsr:updateInterval attribute setting an update interval of the structured information. Here, when a value of the lsr:updateInterval is set to "none", the structured information is updated once, and when the value of the lsr:updateInterval is set to "free", the structured information is updated at an arbitrary interval, and when the value of the lsr:updateInterval is a "<Clock-value>" being greater than "0", the structured information is updated at "<Clock-value>" intervals.

Also, the scene representation data addresses a text included in the structured information by using a SVG tref as a child element of "SVG textArea", and determines a character of the text by using the SVG textArea to provide text wrapping.

Also, the scene representation data provides a LASeR taref element that addresses textual contents, as a child element of the SVG textArea element. Here, the LASeR taref element has an xlink:href attribute indicating a referenced element or a referenced attribute.

According to another aspect of an exemplary embodiment, there is provided a method of updating structured information, including extracting information described in scene representation data, and updating the structured information based on the described information according to an attribute of a type.

### Advantageous Effects of Invention

According to an exemplary embodiment of the present invention, there is provided a device and a method of updating Structured Information (SI), the device and the method extracting information described in Presentation Information (PI), updating the SI based on the described information, and modifying the SI based on the PI.

### Brief Description of Drawings

FIG. 1 illustrates a mechanism that updates Structured Information (SI) according to an embodiment of the present invention;

FIG. 2 illustrates source code to replace a predetermine value in an SI according to an embodiment of the present invention;

FIG. 3 illustrates a source code to replace a predetermined attribute in an SI according to an embodiment of the present invention;

FIG. 4 illustrates source code to insert a predetermined element to an SI according to an embodiment of the present invention;

FIG. 5 illustrates a source code of Presentation Information (PI) to update an SI at predetermined intervals according to an embodiment of the present invention; and

FIG. 6 and 7 illustrates source code of PI to determine a character with respect to a text and to provide a text wrapping according to an embodiment of the present invention.

### Mode for the Invention

Although a few exemplary embodiments of the present invention have been shown and described, the present invention is not limited to the described exemplary embodiments, wherein like reference numerals refer to the like elements throughout.

In a Presentation and Modification of Structured Information (PMSI) scheme, a mechanism of updating Structured Information (SI) based on a result of a presentation is required. As an example, when a user selects a preferred item, such as a genre, a color, a location, and the like from a presented scene, the SI including user preference data may need to be updated based on preference characteristics information of the user.

Accordingly, example embodiments of the present invention may update the SI from scene representation data (presentation information) according to information described in a scene. In this instance, the SI may be metadata specifying an item to be represented. The SI may be expressed by Moving Pictures Expert Group (MPEG)-21 Digital Item Declaration (DID) standard, and an MPEG-7 standard, and also, may be structured information constructed by the user. Also, the scene representation data may be a scene description scheme indicating how to represent the SI. The scene representation data may be expressed by Binary Format For Scenes (BIFS), and Lightweight Application Scene Representation (LASeR), and, depending on embodiments of the present invention, a LASeR format may be applicable.

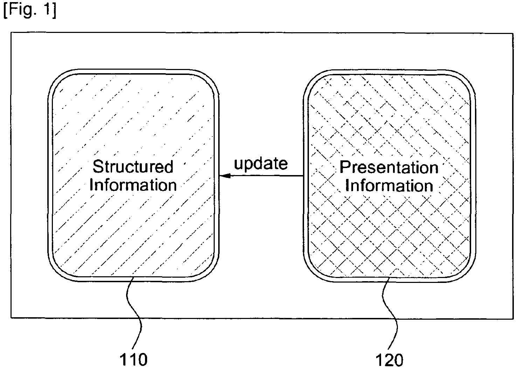

An example of an update mechanism proposed by embodiments of the present invention will be described in detail with reference to FIG. 1.

FIG. 1 illustrates a mechanism that updates SI according to an embodiment of the present invention.

Referring to FIG. 1, the SI is updated from presentation data (scene representation data) according to information described in a scene. As an example, the SI is updated to reflect an item described in Presentation Information (PI) according to a change of the scene.

With respect to the above description, the present invention discloses embodiments as follows.

(a) defining an externalUpdate element to modify elements or attributes of SI

(b) using an SVG tref element for referencing textual contents of an SVG text or an SVG textArea

(c) using an LASeR taref element for referencing textual contents of an SVG textArea

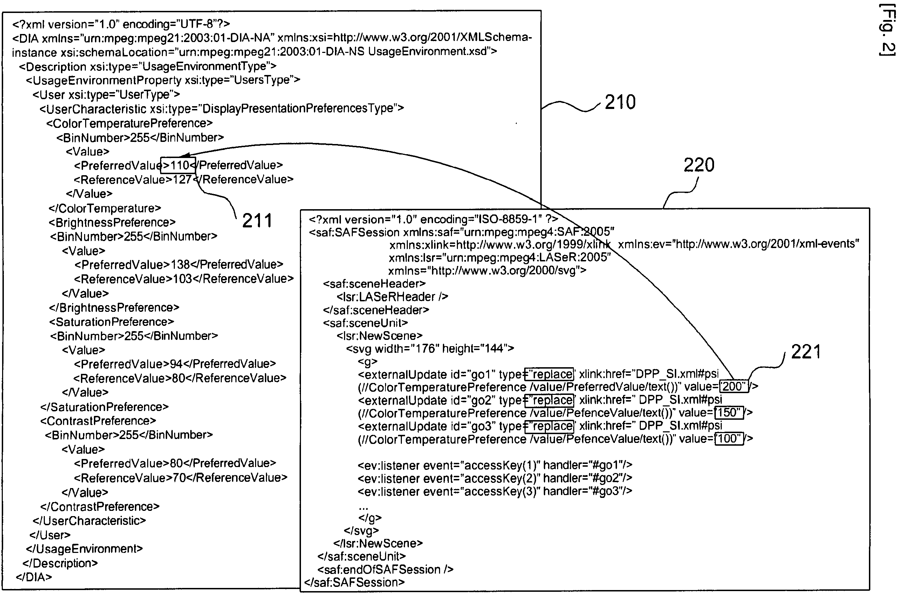

Hereinafter, embodiments of the present invention will be described in detail with reference to FIGS. 2 through 6.

<LASeR externalUpdate element>

(1) proposing an externalUpdate element that may modify a part of the SI, may insert additional information to the SI, or may delete a part of the SI.

(2) Semantics

The externalUpdate element may support updating of the SI and may have three types: "replace", "insert", and "delete". Accordingly, a part of the SI may be replaced with new elements or new values, the new elements or the values may be inserted to the SI, or a part of the SI may be deleted, according to one of the provided three types.

(3) Attributes

(a) xlink:href

An xlink:href attribute may indicate an element or an attribute to be replaced, inserted, or deleted by conjunctly using mpeg-pmsi().

(b) type

A type attribute may have one type of "replace", "insert", and "delete". Here, when the type attribute is the "replace", an existing element/attribute may be replaced with a new element/attribute. When the type attribute is the "insert", the new element/attribute may be inserted to the SI. Also, when the type attribute is the "delete", the existing element/attribute of the Sl may be deleted.

(c) attributeName

An attributeName attribute may define a name of an attribute that is replaced or inserted in the SI.

(d) index

An index attribute may define an index of a child node that is replaced, inserted, or deleted. That is, the child node to be replaced, inserted, or deleted may be determined based on the index. Here, in an absence of the index attribute, the child node may be inserted or replaced at the end of a child list. Also, the child node defined by an index may need to be an element existing in the SI.

(e) operandElementId

An operandElementId attribute may define an identification (ID) of an element from which replacement or insertion is taken. In this instance, the operandElementId may need to be an element existing in the PI.

(f) operandAttributeName

An operandAttributeName attribute may define a name of a field (attribute) from which replacement or insertion is taken. In this instance, the operandAttributeName may need to be a field (attribute) existing in the PI.

(g) value

A value attribute may indicate a value to be replaced or inserted.

(h) lsr:updateInterval

An lsr:updateInterval attribute may define an update interval of the SI. Here, when a value of the lsr:updateInterval attribute is set to "none", the SI is updated once, and when the value of the lsr:updateInterval attribute is set to "free", the SI is updated at an arbitrary interval, and when the value of the lsr:updateInterval attribute is a "<Clock-value>" being greater than "0", the SI is updated at "<Clock-value>" intervals. Hereinafter, an update interval mechanism will be described in detail.

<update interval mechanism>

(1) Proposal

A mechanical process may be provided to update the SI. Accordingly, the lsr:updateInterval attribute, may be proposed.

An updateInterval attribute indicates an update interval with respect to all elements and attributes included in a corresponding element. In this instance, the updateInterval attribute may be one of "none", "free", and "<Clock-value>".

First, when the updateInterval attribute is "none", the "none" value may indicate that the referred Structured Information shall be modified only once. That is, whether the scene representation data is updated may not be determined again.

When the updateInterval attribute is "free", the "free" value may indicate that whether the scene representation data is updated is determined at an arbitrary interval. That is, the "free" value does not indicate that an author of the presentation sets an updating interval, but indicates that the updated is determined at the arbitrary interval according to discretion of a manufacturer of the device. Accordingly, whether the scene representation data is updated is determined at the arbitrary interval according to the discretion of a manufacturer of the device, and the SI may be updated with an item for updating.

When the updateInterval attribute is "<Clock-value>", the "<Clock-value>" indicates that the updated is determined at a predetermined "<Clock-value>" interval. In this instance, the "<Clock-value>" value may need to be greater than 0. That is, when the updateInterval attribute is "<Clock-value>", the author of the presentation may set an interval for reasonably meaningful value for the update.

(2) Example

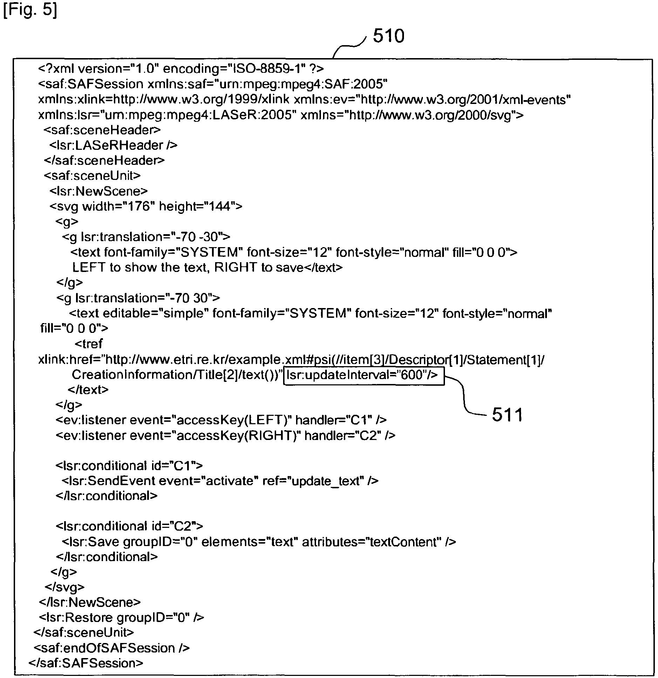

FIG. 5 illustrates a source code of PI 510 to update an SI according to an embodiment of the present invention.

Referring to FIG. 5, lsr:updateInterval for updating SI is defined as "600" 511, and thus, it is a case that the lsr:updateInterval attribute is "<Clock-value>", thereby the SI may be updated after every 600 seconds.

(3) Example

FIG. 2 illustrates source code to replace a predetermined value in an SI according to an embodiment of the present invention.

Referring to FIG. 2, a value in the SI 210 may be replaced based on a "replace" attribute in the PI 220. As illustrated in FIG. 2, an existing value "110" 211 of Col-orTemperaturePreference in the SI 210 may be replaced with a value "200" 221 in the PI 220 according to the value "200" 221.

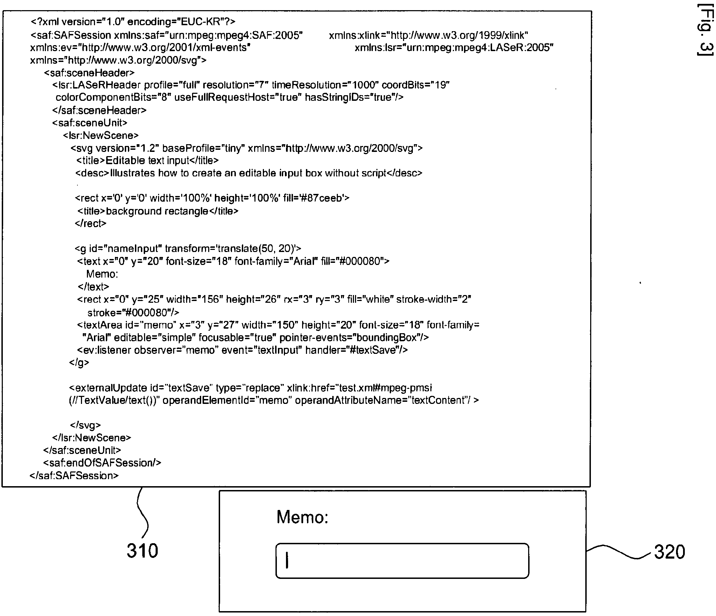

FIG. 3 illustrates a source code to replace a predetermined attribute in an SI according to an embodiment of the present invention.

Referring to FIG. 3, when a text and the like are inputted through a "memo" area 320 in a scene based on a "replace" attribute in the PI 310, the predetermined text in the SI may be replaced based on the inputted text.

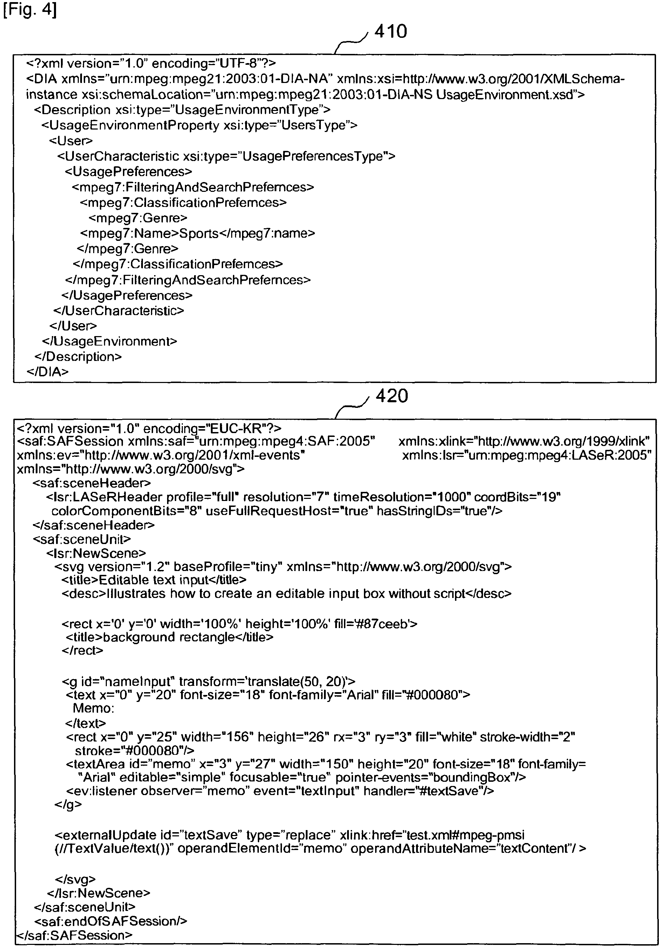

FIG. 4 illustrates source code to insert a predetermined element to an SI according to an embodiment of the present invention.

Referring to FIG. 4, the predetermined element may be inserted to SI 410 based on an "insert" attribute in the PI 420. That is, as illustrated in FIG. 4, an element having a name of a genre corresponding to "movies" may be inserted to the SI 410.

<SVG textArea element>

(1) Proposal

When the SI is represented in a Presentation and Modification of Structured Information (PMSI) application, specific textual information existing in XML data is the most commonly referenced. When text wrapping of the referenced information of a given region is allowed, it is significantly convenient for describing textual contents. Here, a "SVG textArea" element is required for convenient wrapping of textual contents within the given region. Also, an "SVG tref" element having an xlink:href attribute is required for retrieving textual contents by referencing.

Here, SVG (Scalable Vector Graphics) is a language based on XML to represent two-dimensional (2D) graphic. A tref (text reference) is used for referencing a text included in the SI, and the SVG indicates how to represent the text referenced through the tref.

Accordingly, an embodiment of the present invention introduces the "SVG tref" element and the "SVG textArea" element. The "SVG tref" element is defined in subclause 10.6 of [W3C SVG11]. Also, SVGT1.2 defines the "SVG textArea" element in subclause 10.11 of [W3C SVGT12]. Text wrapping through the "SVG textArea" element may be lightweight and convenient. The contextual content of "SVG textArea" element can be only actual character data without SVG tref element. Here, the "SVG tref" element may be used as a child element of the "SVG textArea" element.

(2) Example

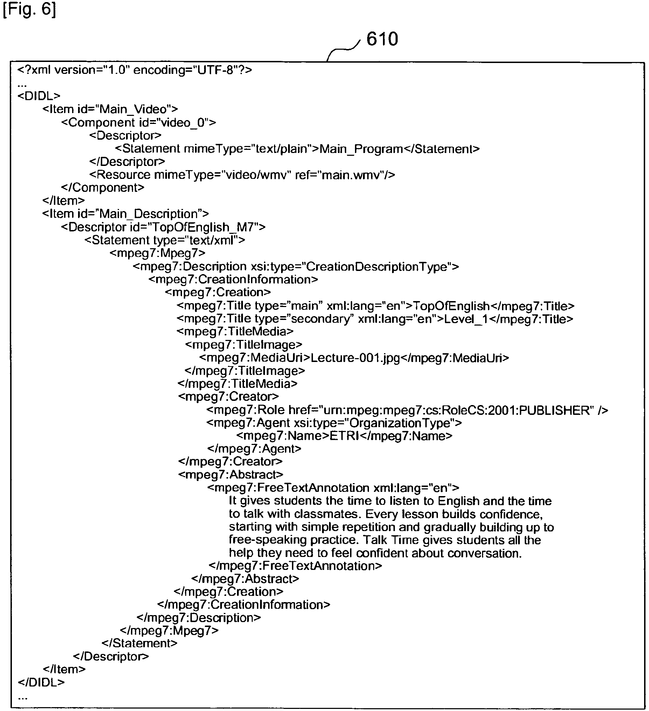

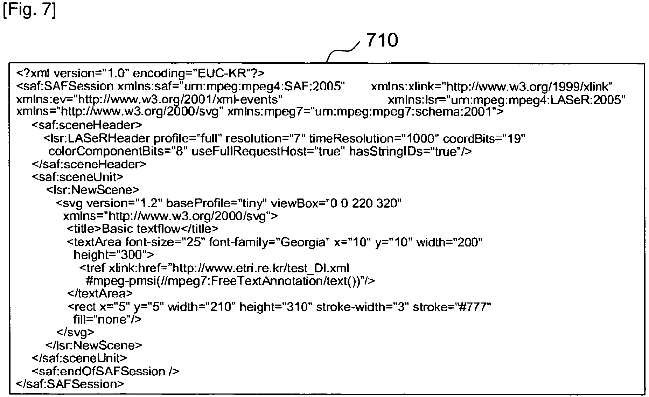

FIG. 6 and 7 illustrates source code of a PI to determine a character with respect to the text according to an embodiment of the present invention.

Referring to FIG. 6 and 7, the character of the text in SI 610 may be modified by a "textArea" element of PI 710. Here, the character may include a font-size of the text, a font-family, a location of the text (x, y), a width, a height, and the like. As an example, referring to FIG. 6 and 7, in the SI 610, the font-size of the text may be set to "25", the font-family may be set to "Georgia", the location of the text may be set to x = 10 and y = 10, the width may be set to "200", and the height may be set to "300".

That is, the present embodiment may propose to address a text included in the SI by using the "SVG tref" as a child element of the "SVG textArea", and to determine the character with respect to the text by using the "SVG textArea" to provide the text wrapping.

However, the PI (scene representation data) may access a fragment of the SI to perform scene representation of the fragment. That is, the scene representation data may address the SI based on a predetermined mpeg-pmsi() scheme. Here, the mpeg-pmsi() scheme will be described in detail.

<LASeR taref element>

(1) Proposal and Semantics

An "SVG textArea" element is required for performing wrapping of convenient textual contents within a given region. Also, an "LASeR taref" element including an xlink:href attribute may be required to retrieve textual contents through referencing.

The "LASeR taref" element may be used as a child element of the "SVG textArea" element. An effect of the "LASeR taref" element is similar to an effect of the "SVG tref".

(2) Attribute

The LASeR taref element may include an xlink:href attribute indicating an element or attribute to be referenced.

<mpeg-pmsi() scheme>

(1) An mpeg-pmsi() scheme as a pointing scheme for fragments of the SI

The mpeg-pmsi() scheme is intended to be used together with an XPointer framework to address the fragments of the SI under a LASeR namespace.

Also, a process of entities addressed by the mpeg-pmsi() scheme may be changed based on a type of a node that uses the mpeg-pmsi().

(2) Syntax

The mpeg-pmsi() scheme may be defined as an Extended Backus-Naur Form (EBNF) syntax as shown in Table 1 below.

[Table 1]

| |
|---|
| PointerForStructuredInformation ::= PointerForStructuredInformationSchemeName "(" PointerForStructuredInformationSchemeData")" |
| PointerForStructuredInformationSchemeName ::= "mpeg-pmsi" |

(3) Semantics

PointerforStructuredInformationSchemeData in Table 1 is based on a W3C(World Wide Web Consortium) XPath abbreviated syntax.

Also, the mpeg-pmsi() scheme may support an Xpath predicate for filtering out a node-set given from undesired nodes.

As an example, Table 2 as given below indicates representation indicating a ref attribute of a Resource element. Here, the Resource element is a child element of a Component element having a title attribute of a 'video_1' value.

[Table 2]

| |
|---|
| #mpeg-pmsi(Component[@title='video_1']/Resource/@ref)) |

As described above, the LASeR is a multimedia contents standard and is a scene description format for representing and delivering a rich media service to a device having a limited resources such as a mobile phone. That is, the LASeR is to perform a request from the rich media service in a scene description level.

A decoder model of a LASeR system may include a decoding buffer, an elementary stream, at least one decoder, and a composition unit. The decoder model may decode a decoding buffer that stores data coded for each elementary stream. A result of the decoding may be stored in the composition unit.

As described above, according to an embodiment of the present invention, an update based on information described in the PI and the scene representation based on the SI may mutually operate.

However, a method of updating the SI according to embodiments of the present invention may include extracting information described in the scene representation data and updating SI based on the described information according to a type attribute.

Information described in the scene representation data is extracted through an input of a user and the like, and the SI is updated based on the described information. In this instance, the SI may be updated based on the attribute of the type included in the externalUpdate element supporting the update of the SI. Here, the attribute of the type may include three attributes: "replace", "insert", and "delete".

Although a few embodiments of the present invention have been shown and described, the present invention is not limited to the described embodiments. Instead, it would be appreciated by those skilled in the art that changes may be made to these embodiments without departing from the principles the invention, the scope of which is defined by the claims and their equivalents.

## Claims

1. An updating device of updating structured information, comprising:
means for extracting information described in scene representation data; and
means for updating the structured information based on said information according to an attribute of a type included in an externalUpdate element that supports an update of the structured information, said attribute of a type being one of a replacement, an insertion, and a deletion.

2. The updating device of claim 1, wherein the updating device updates the structured information based on information described in scene representation data.

3. The device of claim 1, wherein the externalUpdate element includes at least one of the below:
an 'xlink:href' attribute indicating an element to be replaced, inserted, or deleted by using mpeg-pmsi();
a 'type' attribute defining one type of a replacement, an insertion, and a deletion;
an 'attributeName' attribute defining a name of an attribute to be replaced or inserted;
an 'index' attribute defining an index of a child node to be replaced, inserted, or deleted;
an 'operandElementId' attribute defining an ID of an element from which a replacement or an insertion is taken;
an 'operandAttributeName' attribute determining a name of an attribute from which a replacement or an insertion is taken;
a 'value' attribute indicating a value to be replaced or inserted; and
an lsr:updateInterval attribute setting an update interval of the structured information.

4. The updating device of claim 1, wherein the externalUpdate element includes an lsr:updateInterval attribute setting an update interval of the structured information,
wherein, when a value of the lsr:updateInterval is set to "none", the structured information is updated once, and when the value of the lsr:updateInterval is set to "free", the structured information is updated at an arbitrary interval, and when the value of the lsr:updateInterval is a "<Clock-value>" being greater than "0", the structured information is updated at "<Clock-value>" intervals.

5. The updating device of claim 2, wherein the scene representation data addresses a text included in the structured information by using a SVG tref as a child element of SVG textArea, and determines a character of the text by using the SVG textArea to provide text wrapping.

6. The updating device of claim 5, wherein the scene representation data provides a LASeR taref element that addresses textual contents, as a child element of the SVG textArea element,
wherein the LASeR taref element has an xlink:href attribute indicating a referenced element or a referenced attribute.

7. The updating device of claim 2, wherein the scene representation data may access a fragment of the structured information to perform scene representation of the fragment.

8. The updating device of claim 2, wherein the scene representation data may address the structured information based on a predetermined mpeg-pmsi() scheme.

9. The updating device of claim 8, wherein the predetermined mpeg-pmsi() scheme is defined according to a syntax of Table 1 below,
**[Table 1]**
| |
|---|
| PointerForStructuredInformation ::= PointerForStructuredInformationSchemeName |
| "(" |
| PointerForStructuredInformationSchemeData")" |
| PointerForStructuredInformationSchemeName ::= "mpeg-pmsi" |
wherein, the PointerForStructuredInformationSchemeData is based on an Xpath abbreviated syntax.

10. A method of updating structured information, comprising:
extracting information described in scene representation data; and
updating the structured information based on said information according to an attribute of a type included in an externalUpdate element that supports an update of the structured information, said attribute of a type being one of a replacement, an insertion, and a deletion.

11. The method of claim 10, wherein the externalUpdate element includes at least one of the below:
an 'xlink:href attribute indicating an element to be replaced, inserted, or deleted by using mpeg-pmsi();
a 'type' attribute defining one type of a replacement, an insertion, and a deletion;
an 'attributeName' attribute defining a name of an attribute to be replaced or inserted;
an 'index' attribute defining an index of a child node to be replaced, inserted, or deleted;
an 'operandElementId' attribute defining an ID of an element from which a replacement or an insertion is taken;
an 'operandAttributeName' attribute determining a name of an attribute from which a replacement or an insertion is taken;
a 'value' attribute indicating a value to be replaced or inserted; and
an lsr:updateInterval attribute setting an update interval of the structured information.

12. The method of claim 11, wherein,
when a value of the lsr:updateInterval is set to "none", the lsr:updateInterval attribute updates the structured information once, and when the value of the lsr:updateInterval is set to "free", the lsr:updateInterval attribute updates the structured information at an arbitrary interval, and when the value of the lsr:updateInterval is a "<Clock-value>" being greater than "0", the lsr:updateInterval attribute updates the structured information at "<Clock-value>" intervals.

13. The method of claim 10, wherein the scene representation data addresses a text included in the structured information by using a SVG tref as a child element of SVG textArea, and determines a character of the text by using the SVG textArea to provide text wrapping.

## Patentansprüche

1. Aktualisierungsgerät zum Aktualisieren von strukturierter Information, umfassend:
Mittel zum Extrahieren von Information, welche in Szenendarstellungsdaten beschrieben ist; und
Mittel zum Aktualisieren der strukturierten Information basierend auf der Information in Übereinstimmung mit einem Attribut eines Typs, welches in einem externalUpdate-Element enthalten ist, welches eine Aktualisierung der strukturierten Information unterstützt, wobei das Attribut eines Typs ein Austausch, eine Einfügung oder eine Löschung ist.

2. Aktualisierungsgerät nach Anspruch 1, wobei das Aktualisierungsgerät die strukturierte Information basierend auf Information aktualisiert, welche in Szenendarstellungsdaten beschrieben ist.

3. Gerät nach Anspruch 1, wobei das externalUpdate-Element wenigstens eines der nachfolgenden enthält:
ein 'xlink:href'-Attribut, welches ein zu ersetzendes, einzufügendes oder zu löschendes Element unter Verwendung von mpeg-pmsi() angibt;
ein 'type'-Attribut, welches einen Typ eines Austausches, einer Einfügung oder einer Löschung definiert;
ein 'attributeName'-Attribut, welches einen Namen eines zu ersetzenden oder einzufügenden Attributs definiert;
ein 'index'-Attribut, welches einen Index eines zu ersetzenden, einzufügenden oder zu löschenden Kindknotens definiert;
ein 'operandElementId'-Attribut, welches eine ID eines Elements definiert, aus welchem ein Austausch oder eine Einfügung genommen ist;
ein 'operandAttributeName'-Attribut, welches einen Namen eines Attributs bestimmt, von welchem ein Austausch oder eine Einfügung genommen ist;
ein 'value'-Attribut, welches einen zu ersetzenden oder einzufügenden Wert angibt; und
ein lsr:updateInterval-Attribut, welches ein Aktualisierungsintervall der strukturierten Information einstellt.

4. Aktualisierungsgerät nach Anspruch 1, wobei das externalUpdate-Element ein lsr:updateInterval-Attribut enthält, welches ein Aktualisierungsintervall der strukturierten Information einstellt,
wobei, wenn ein Wert des lsr:updateInterval auf "kein" eingestellt ist, die strukturierte Information einmal aktualisiert wird und, wenn der Wert des lsr:updateInterval auf "frei" eingestellt ist, die strukturierte Information in einem beliebigen Intervall aktualisiert wird und, wenn der Wert des lsr:updateInterval ein "<Clock-value>" größer als "0" ist, die strukturierte Information in "<Clock-value>"-Intervallen aktualisiert wird.

5. Aktualisierungsgerät nach Anspruch 2, wobei die Szenendarstellungsdaten einen Text, der in der strukturierten Information enthalten ist, mittels eines SVG-tref als ein Kindelement von SVG-textArea adressieren und ein Zeichen des Textes mittels der SVG-textArea bestimmen, um eine Texteinfassung vorzusehen.

6. Aktualisierungsgerät nach Anspruch 5, wobei die Szenendarstellungsdaten ein LASeR-taref-Element, welches Textinhalte adressiert, als ein Kindelement des SVG-textArea-Elements vorsehen,
wobei das LASeR-taref-Element ein xlink:href-Attribut aufweist, welches ein referenziertes Element oder ein referenziertes Attribut angibt.

7. Aktualisierungsgerät nach Anspruch 2, wobei die Szenendarstellungsdaten auf ein Fragment der strukturierten Information zugreifen können, um Szenendarstellung des Fragments durchzuführen.

8. Aktualisierungsgerät nach Anspruch 2, wobei die Szenendarstellungsdaten die strukturierte Information basierend auf einem vorbestimmten mpeg-pmsi()-Schema adressieren können.

9. Aktualisierungsgerät nach Anspruch 8, wobei das vorbestimmte mpeg-pmsi()-Schema in Übereinstimmung mit einer Syntax von nachfolgender Tabelle 1 definiert ist:
**[Tabelle 1]**
| |
|---|
| PointerForStructuredInformation ::= PointerForStructuredInformationSchemeName |
| "(" |
| PointerForStructuredInformationSchemeData")" |
| PointerForStructuredInformationSchemeName ::= "mpeg-pmsi" |
wobei PointerForStructuredInformationSchemaData auf einer Xpathverkürzten Syntax basiert.

10. Verfahren zum Aktualisieren von strukturierter Information, umfassend:
Extrahieren von Information, welche in Szenendarstellungsdaten beschrieben ist; und
Aktualisieren der strukturierten Information basierend auf der Information in Übereinstimmung mit einem Attribut eines Typs, welches in einem externalUpdate-Element enthalten ist, welches eine Aktualisierung der strukturierten Information unterstützt, wobei das Attribut eines Typs ein Austausch, eine Einfügung oder eine Löschung ist.

11. Verfahren nach Anspruch 10, wobei das externalUpdate-Element wenigstens eines der nachfolgenden enthält:
ein 'xlink:href'-Attribut, welches ein zu ersetzendes, einzufügendes oder zu löschendes Element unter Verwendung von mpeg-pmsi() angibt;
ein 'type'-Attribut, welches einen Typ eines Austausches, einer Einfügung oder einer Löschung definiert;
ein 'attributeName'-Attribut, welches einen Namen eines zu ersetzenden oder einzufügenden Attributs definiert;
ein 'index'-Attribut, welches einen Index eines zu ersetzenden, einzufügenden oder zu löschenden Kindknotens definiert;
ein 'operandElementId'-Attribut, welches eine ID eines Elements definiert, aus welchem ein Austausch oder eine Einfügung genommen ist;
ein 'operandAttributeName'-Attribut, welches einen Namen eines Attributs bestimmt, von welchem ein Austausch oder eine Einfügung genommen ist;
ein 'value'-Attribut, welches einen zu ersetzenden oder einzufügenden Wert angibt; und
ein lsr:updateInterval-Attribut, welches ein Aktualisierungsintervall der strukturierten Information einstellt.

12. Verfahren nach Anspruch 11, wobei,
wenn ein Wert des lsr:updateInterval auf "kein" eingestellt ist, die strukturierte Information einmal aktualisiert wird und, wenn der Wert des lsr:updateInterval auf "frei" eingestellt ist, die strukturierte Information in einem beliebigen Intervall aktualisiert wird und, wenn der Wert des lsr:updateInterval ein "<Clock-value>" größer als "0" ist, die strukturierte Information in "<Clock-value>"- Intervallen aktualisiert wird.

13. Verfahren nach Anspruch 10, wobei
die Szenendarstellungsdaten einen Text, der in der strukturierten Information enthalten ist, mittels eines SVG-tref als ein Kindelement von SVGtextArea adressieren und ein Zeichen des Textes mittels der SVG-textArea bestimmen, um eine Texteinfassung vorzusehen.

## Revendications

1. Dispositif de mise à jour d'informations structurées, comprenant :
un moyen pour extraire des informations décrites dans des données de représentation de scène ; et
un moyen pour mettre à jour les informations structurées sur la base desdites informations selon un attribut d'un type compris dans un élément externalUpdate qui supporte une mise à jour des informations structurées, ledit attribut d'un type étant l'un parmi un remplacement, une insertion et une suppression.

2. Dispositif de mise à jour selon la revendication 1, dans lequel le dispositif de mise à jour met à jour les informations structurées sur la base d'informations décrites dans des données de représentation de scène.

3. Dispositif selon la revendication 1, dans lequel l'élément externalUpdate comprend au moins l'un des éléments ci-dessous :
un attribut 'xlink:href' indiquant un élément à remplacer, à insérer ou à supprimer en utilisant mpeg-pmsi() ;
un attribut 'type' définissant un type parmi un remplacement, une insertion et une suppression ;
un attribut 'attributeName' définissant un nom d'un attribut à remplacer ou à insérer ;
un attribut 'index' définissant un index d'un noeud enfant à remplacer, à insérer ou à supprimer ;
un attribut 'operandElementId' définissant un identifiant d'un élément à partir duquel un remplacement ou une insertion est pris ;
un attribut 'operandAttributeName' déterminant un nom d'un attribut à partir duquel un remplacement ou une insertion est pris ;
un attribut `value' indiquant une valeur à remplacer ou à insérer ; et
un attribut lsr:updateInterval réglant un intervalle de mise à jour des informations structurées.

4. Dispositif de mise à jour selon la revendication 1, dans lequel l'élément externalUpdate comprend un attribut lsr:updateInterval réglant un intervalle de mise à jour des informations structurées,
dans lequel, lorsqu'une valeur du lsr:updateInterval est réglée sur « none », les informations structurées sont mises à jour une fois, et lorsque la valeur du lsr:updateInterval est réglée sur « free », les informations structurées sont mises à jour à un intervalle arbitraire, et lorsque la valeur du lsr:updateInterval est une « <Clock-value> » supérieure à « 0 », les informations structurées sont mises à jour à des intervalles « <Clock-value> ».

5. Dispositif de mise à jour selon la revendication 2, dans lequel les données de représentation de scène adressent un texte compris dans les informations structurées en utilisant une tref SVG en tant qu'élément enfant d'un textArea SVG, et déterminent un caractère du texte en utilisant le textArea SVG pour fournir un emballage du texte.

6. Dispositif de mise à jour selon la revendication 5, dans lequel les données de représentation de scène fournissent un élément LASeR taref qui adresse des contenus textuels, en tant qu'élément enfant de l'élément textArea SVG,
dans lequel l'élément LASeR taref a un attribut xlink:href indiquant un élément référencé ou un attribut référencé.

7. Dispositif de mise à jour selon la revendication 2, dans lequel les données de représentation de scène peuvent accéder à un fragment des informations structurées pour réaliser une représentation de scène du fragment.

8. Dispositif de mise à jour selon la revendication 2, dans lequel les données de représentation de scène peuvent adresser les informations structurées sur la base d'un schéma mpeg-pmsi() prédéterminé.

9. Dispositif de mise à jour selon la revendication 8, dans lequel le schéma mpeg-pmsi() prédéterminé est défini selon une syntaxe du tableau 1 ci-dessous,
**[Tableau 1]**
| |
|---|
| PointerForStructuredInformation ::= |
| PointerForStructuredInformationSchemeName "(" |
| PointerForStructuredInformationSchemeData ")" |
| PointerForStructuredInformationSchemeName ::= "mpeg-pmsi" |
dans lequel PointerForStructuredInformationSchemeData est sur la base d'une syntaxe abrégée Xpath.

10. Procédé de mise à jour d'informations structurées, comprenant :
l'extraction d'informations décrites dans des données de représentation de scène ; et
la mise à jour des informations structurées sur la base desdites informations selon un attribut d'un type compris dans un élément externalUpdate qui supporte une mise à jour des informations structurées, ledit attribut d'un type étant l'un parmi un remplacement, une insertion et une suppression.

11. Procédé selon la revendication 10, dans lequel l'élément externalUpdate comprend au moins l'un des éléments ci-dessous :
un attribut 'xlink:href' indiquant un élément à remplacer, à insérer ou à supprimer en utilisant mpeg-pmsi () ;
un attribut 'type' définissant un type parmi un remplacement, une insertion et une suppression ;
un attribut 'attributeName' définissant un nom d'un attribut à remplacer ou à insérer ;
un attribut 'index' définissant un index d'un noeud enfant à remplacer, à insérer ou à supprimer ;
un attribut 'operandElementId' définissant un identifiant d'un élément à partir duquel un remplacement ou une insertion est pris ;
un attribut 'operandAttributeName' déterminant un nom d'un attribut à partir duquel un remplacement ou une insertion est pris ;
un attribut 'value' indiquant une valeur à remplacer ou à insérer ; et
un attribut lsr:updateInterval réglant un intervalle de mise à jour des informations structurées.

12. Procédé selon la revendication 11, dans lequel,
lorsqu'une valeur du lsr:updateInterval est réglée sur « none », l'attribut lsr:updateInterval met à jour les informations structurées une fois, et lorsque la valeur du lsr:updateInterval est réglée sur « libre », l'attribut lsr:updateInterval met à jour les informations structurées à un intervalle arbitraire, et lorsque la valeur du lsr:updateInterval est une « <Clock-value> » supérieure à « 0 », l'attribut lsr:updateInterval met à jour les informations structurées à des intervalles « <Clock-value> ».

13. Procédé selon la revendication 10, dans lequel les données de représentation de scène adressent un texte compris dans les informations structurées en utilisant une tref SVG en tant qu'élément enfant d'un textArea SVG, et déterminent un caractère du texte en utilisant le textArea SVG pour fournir un emballage du texte.
